# EUROPEAN PATENT SPECIFICATION

(11) **EP 4 332 026 B1**
(45) Date of publication and mention of the grant of the patent: **11.06.2025**
(21) Application number: 23193239.3
(22) Date of filing: 24.08.2023
(51) Int. Cl.: B65G 17/32, B65B 59/00, B65G 17/42, B65G 17/46

(54) **HANDLING APPARATUS FOR PACKAGES OF PASTA, GRANULAR PRODUCTS AND THE LIKE, WITH ADJUSTABLE RETAINING ELEMENTS**
VORRICHTUNG ZUM HANDHABEN VON NUDEL-, GRANULAT- UND ÄHNLICHEN VERPACKUNGEN, MIT VERSTELLBAREN HALTEELEMENTEN.
APPAREIL DE MANIPULATION POUR EMBALLAGES DE PÂTES ALIMENTAIRES, DE PRODUITS GRANULAIRES ET SIMILAIRES, AVEC ÉLÉMENTS DE RETENUE RÉGLABLES.

(30) Priority: 29.08.2022 IT 202200017718
(43) Date of publication of application: 06.03.2024
(73) Proprietor: CYBORGLINE SA, 6900 Paradiso - Lugano (CH)
(72) Inventor: VEZZANI, Giuseppe, 6900 PARADISO - LUGANO (CH)
(74) Representative: Mittler, Andrea

(56) References cited:
- EP-A2- 0 989 060
- GB-A- 2 260 743
- US-A- 3 608 701

## Description

"Handling apparatus for packages of pasta, granular products and the like, with adjustable retaining elements".

The present invention relates to a handling apparatus for packages of pasta, granular products and the like, with adjustable retaining elements.

Packaging machines, in particular used in the food industry, providing for enclosing inside a package various small products, such as, for example, short pasta, are known.

Such packaging machines comprise a handling apparatus suitable for transporting the packages along the packaging machine through a plurality of processing units arranged in sequence. Conventionally, the handling apparatus supports a succession of retaining elements suitable for defining a plurality of housings, each of which receives at least one package. Each of said retaining elements comprises two side walls, one upstream and one downstream with respect to the feeding direction of the retaining element. The package rests at the bottom on a plane of the handling apparatus, said walls being orthogonal to said base plane.

The drawbacks of using such handling apparatuses are, on the one hand, not being able to ensure a stable positioning of the package inside the respective housing, and on the other, the impossibility of processing various types of different packages.

Handling apparatuses comprising retaining elements suitable for defining varying volume housings are known.

For example, US-2005/0235612 describes a handling apparatus with a retaining element having a housing with a "C"-shaped section, in which the side walls are at a variable distance; one of the two walls is mobile with respect to the other by means of a gear controlled by a cam mechanism.

US-2016/01776658 shows a conveyor with retaining elements having housings with mobile side walls controlled by linear motors with permanent magnets.

US-6629403 describes a handling apparatus with retaining arms with variable distance by means of a cam mechanism.

GB 2 260 743 A discloses a handling apparatus according to the preamble of claim 1.

Disadvantageously, the solutions proposed for varying the housing of the retaining element provide complicated cam mechanisms which increase the overall volume of the handling apparatus, make maintenance difficult and do not allow quick adaptation to packages having different measurements.

It is the object of the present invention to make a handling apparatus for a packaging machine of pasta, granular products and the like, comprising adjustable retaining elements.

A further object of the present invention is that the retaining elements have side walls at a variable distance, in which said distance may be varied simultaneously for all the retaining elements.

Again, a further object of the present invention is that the handling apparatus remains compact, with limited overall volume, and in which the movement mechanism is easily accessible for maintenance.

According to the invention, said and further objects are achieved by a handling apparatus for a succession of packages of pasta, granular products and the like, for a packaging machine, comprising:
a bearing frame which supports at least a first chain meshed between a first drive crown and a first idle crown, thus defining a first closed path which comprises two straight portions and two curved portions, respectively opposite each other, the first drive crown being moved by a first brushless motor,
a plurality of retaining elements removably fixed to the first chain,
in which each retaining element comprises a housing suitable for housing a single package, and a support element suitable for connecting the housing to the first chain hooked to the support element in a first seat of the support element, in which the first chain is suitable for simultaneously moving the retaining elements along the closed path defined by the same first chain,
in which the housing has a substantially "C"-shaped section and is formed by a rear wall, a fixed side wall and a mobile side wall, the mobile side wall being suitable for moving towards the fixed side wall or away from the fixed side wall, thus varying the distance between the side walls and consequently, the width of the housing,
in which the mobile side wall is slidably fixed to the support element by means of a connection element,
wherein
the handling apparatus also comprises at least a second chain suitable for simultaneously defining the width of the housings of all the retaining elements,
in which the second chain is meshed between a second drive crown and a second idle crown, thus defining a second closed path substantially parallel to the first closed path and similarly comprising two straight portions and two curved portions, respectively opposite each other, the second drive crown being moved by a second brushless motor which is independent with respect to the first brushless motor,
in which the support element comprises a second seat in which the second chain is hooked,
in which the second chain is suitable for being hooked by means of a hooking element integral with the connection element and slidable in the second seat in the approach/removal direction of the mobile side wall with respect to the fixed side wall.

Advantageously, the handling apparatus is compact with a limited increase in overall volume with respect to solutions with only the first chain suitable for moving the retaining elements because the second crowns suitable for moving the second chain almost overlap the first chains suitable for moving the first chain.

The means suitable for controlling the movement of the mobile side walls are substantially integrated in the support element already present in known handling apparatuses.

The stroke of the hooking element in the second seat allows a flexibility in use, i.e. an easy adaptation to packages having different sizes.

The control varying the distance between the side walls is simple, quick and synchronized for all the retaining elements.

A computerized unit allows, for example, controlling the passage from a first position to a second position of the mobile side walls with respect to the fixed side walls.

These and other features of the present invention will become more apparent from the following detailed description of practical embodiments thereof shown by way of non-limiting examples in the accompanying drawings, in which:
Figure 1 shows a top plan view of a handling apparatus according to the present invention;
Figure 2 shows a side view of the apparatus;
Figure 3 shows a sectional view taken along line III-III in Figure 1;
Figure 4 shows the enlarged content of circle A in Figure 3;
Figure 5 shows the enlarged content of circle B in Figure 3;
Figure 6 shows the enlarged content of circle C in Figure 1;
Figure 7 shows a sectional view taken along line VII-VII of Figure 1;
Figure 8 shows a first perspective view of a retaining element of the apparatus;
Figure 9 shows a second perspective view of the retaining element.

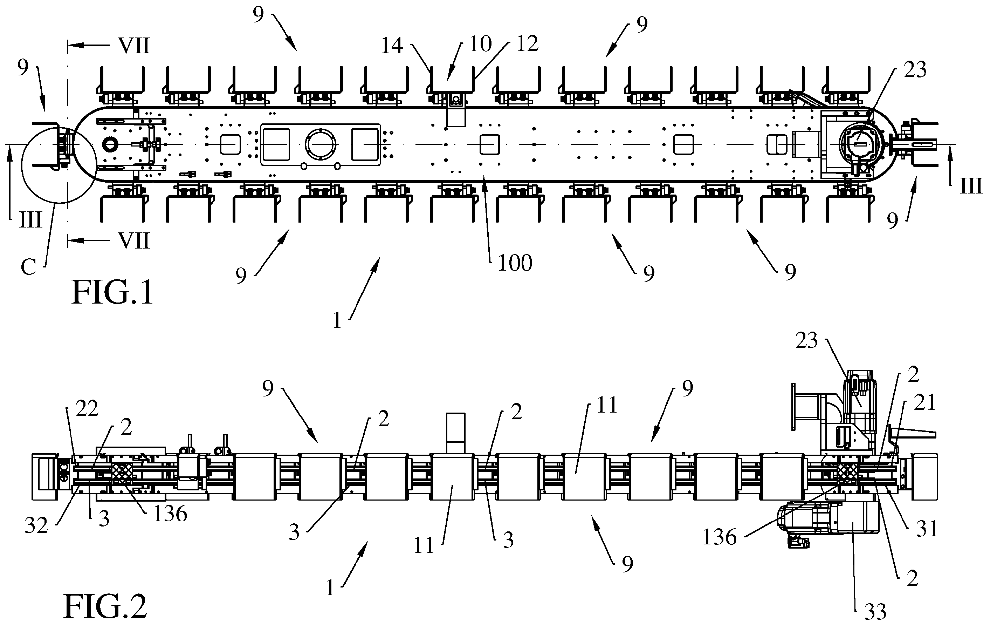

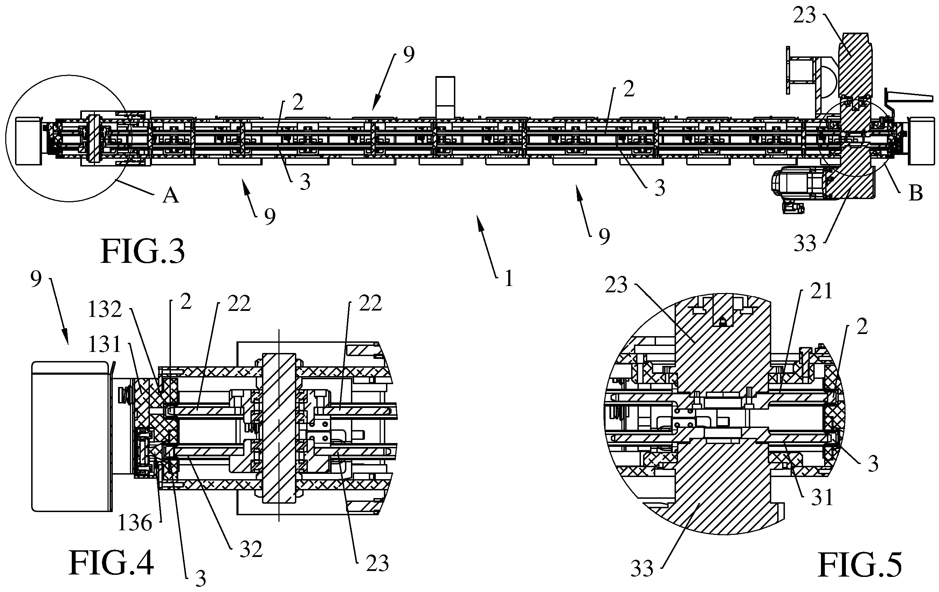

Figures 1 to 3 show a handling apparatus 1 of a measured succession of packages (not shown in the drawings) containing small pieces of food, such as, for example, (short) pasta, granular products and the like.

The handling apparatus 1 is comprised in a packaging machine used in particular in the food industry to enclose said small pieces of food, in particular pasta, inside each package.

For example, a packaging machine comprises in cascade a package forming and filling assembly, a forming assembly of the package head, a sealing and cutting assembly of the package head for forming an upper flap, a folding assembly of an upper flap, a flap folding bar for rotating the upper flap by 90°, and a labeling assembly for fixing the upper flap to the package.

The package may be a plastic material bag with a varying format, or a cardboard box, or likewise a cardboard box with a plastic material bag therein.

The handling apparatus 1 according to the present invention (Figures 1 to 3) comprises a bearing frame 100 which supports at least a first chain 2 and a second chain 3.

Each chain 2, 3 is meshed between a drive crown 21, 31 and an idle crown 22, 32, thus defining a closed path comprising two straight portions and two curved portions, respectively opposite each other. At least one of the two straight portions in particular defines a movement direction for the packages. The rotation axes of the crowns 21, 22, 31, 32 are parallel to one another and furthermore vertical and perpendicular with respect to the movement direction of the packages. The drive crowns 21, 31 are moved by respective mutually independent brushless motors 23, 33.

Belts or similar transmission means intended to perform the same function may be provided in embodiments that are not a part of the present invention in place of the chains 2, 3.

The handling apparatus 1 comprises a plurality of retaining elements 9 removably fixed to the chains 2, 3.

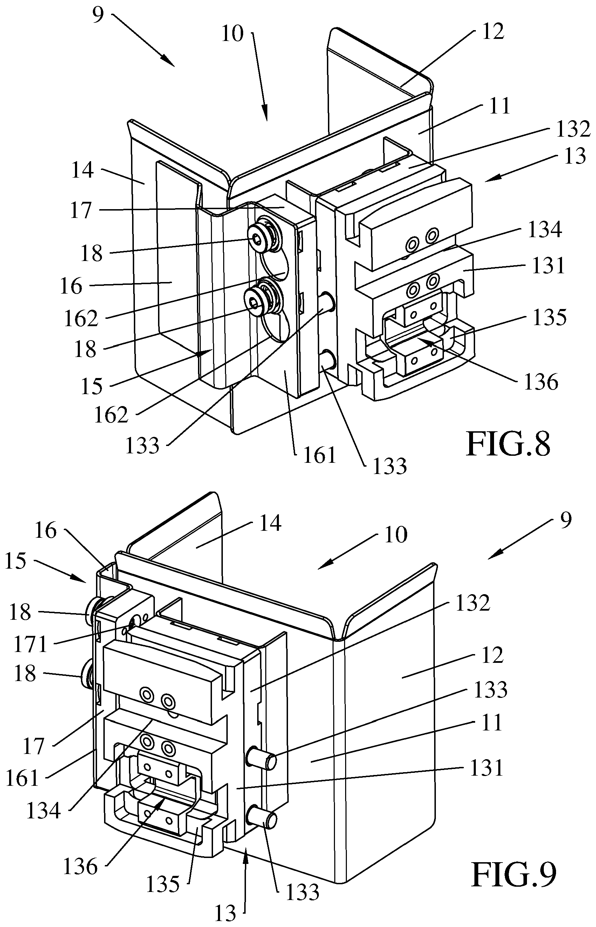

Each retaining element 9 (Figures 8, 9) comprises a housing 10 suitable for housing a single package, and a support element 13 suitable for connecting housing 10 to the chains 2, 3.

Housing 10 has a substantially "C"-shaped section and is formed by a rear wall 11, a fixed side wall 12 and a mobile side wall 14.

The fixed side wall 12 is integral with the rear wall 11, while the mobile side wall 14 is suitable for moving towards the fixed side wall 12 or away from the fixed side wall 12, thus varying the distance between the side walls 12, 14 and accordingly, the width of housing 10.

The mobile side wall 14 is slidably fixed to the support element 13 by means of a connection element 15.

The connection element 15 comprises a plate 16 equipped with straight portions and curved portions, and a block 17.

Plate 16 comprises a straight portion 161 provided with through holes 162 suitable for coupling with block 17 which in turn provides through holes 171; a pair of screws 18 fixes the plate 16 to block 17.

The support element 13 comprises an external block 131 suitable for hooking the chains 2, 3, and an internal block 132 in which there are two bars 133 suitable for sliding, at the ends of which block 17 of the connection element 15 is fixed.

The external block 131 is fixed to the internal block 132 to which the rear wall 11 of housing 10 is fixed.

The external block 131 comprises a first seat 134 in which the first chain 2 is hooked, to a second seat 135 in which the second chain 3 is hooked.

The first chain 2 is hooked with common hooking means such as screws, while the second chain 3 is hooked by means of a hooking element 136 sliding in the second seat 135 and integral with the bars 133.

The hooking element 136 is suitable for sliding in the approach/removal direction of the mobile side wall 14 with respect to the fixed side wall 12.

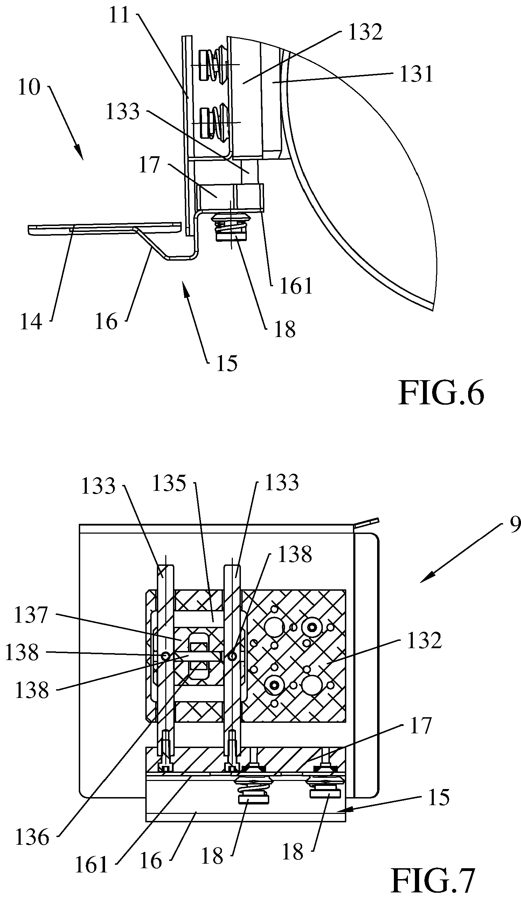

Figure 8 shows that the hooking element 136 preferably has a hollow portion in which to house the second chain 3, while Figure 7 shows that the connection between the hooking element 136 and the bars 133 occurs by means of a block 137 and pins 138.

The hooking element 136, the bars 133, block 137 and the pins 138 define hooking means which allow making the second chain 3 integral with block 17, and therefore with the connection element 15 and accordingly, the mobile side wall 14 which is the component that needs to be moved to vary the width of housing 10.

Said hooking means of the second chain 3 may have a different shape, with different components, but must necessarily make the second chain 3 integral with the mobile side wall 14 so as to make them take on at least two positions with respect to the fixed side wall 12. For example, unlike the embodiment shown, a single bar 133 may be provided.

It is apparent in Figure 2 that housing 10 of the retaining elements 9 at the ends of the handling apparatus 1 was removed to facilitate the comprehension of the assembly of the chains 2, 3.

Operatively, the first chain 2 is suitable for simultaneously moving the retaining elements 9 along the closed path defined by the same first chain 2.

The second chain 3 performs a different function, i.e., it is suitable for defining the width of housing 10 of the retaining elements 9.

The second chain 3, controlled by the respective brushless motor 33, simultaneously controls the movement of all the mobile side walls 14 by means of the respective bars 133.

The hooking element 136 is suitable for sliding in a stroke defined in the second seat 135 which allows defining a plurality of widths of housing 10 based on the shape of the packages.

The driving of the mobile side walls 14 is independent of the driving of the retaining elements 9 because a different brushless motor 23 which controls the first chain 2 is provided.

Advantageously, the handling apparatus 1 is compact with a limited increase in overall volume with respect to solutions with only chain 2 suitable for moving the retaining elements 9 because the second crowns 31, 32 suitable for moving the second chain 3 almost overlap the first chains 21, 22 suitable for moving the first chain 2.

The means suitable for controlling the movement of the mobile side walls 14 are substantially integrated in the support element 13 already present in known handling apparatuses.

The stroke of the hooking element 136 in the second seat 135 allows a flexibility in use, i.e., an easy adaptation to packages having different sizes.

The control varying the distance between the side walls 12, 14 is simple, quick and synchronized for all the retaining elements 9.

A computerized unit allows, for example, controlling the passage from a first position to a second position of the mobile side walls 14 with respect to the fixed side walls 12.

The positions are programmable with known software which assists handling apparatuses 1 of this type.

## Claims

1. Handling apparatus (1) for a succession of packages of pasta, granular products and the like, for a packaging machine, comprising
a bearing frame (100) which supports at least a first chain (2) meshed between a first drive crown (21) and a first idle crown (22) thus defining a first closed path which includes two straight portions and two curved portions, respectively opposite each other, the first drive crown (21) being moved by a first brushless motor (23),
a plurality of retaining elements (9) removably fixed to the first chain (2),
wherein each retaining element (9) comprises a housing (10) suitable for housing a single package, and a support element (13) suitable for connecting the housing (10) to the first chain (2) hooked to the support element (13) in a first seat (234) of the support element (13), wherein the first chain (2) is suitable for simultaneously moving the retaining elements (9) along the closed path defined by the same first chain (2),
wherein the housing (10) has a substantially "C"-shaped section and is formed by a rear wall (11), a fixed side wall (12) and a mobile side wall (14), the mobile side wall (14) being suitable for moving towards the fixed side wall (12) or away from the fixed side wall (12) thus varying the distance between the side walls (12, 14) and consequently the width of the housing (10),
wherein the mobile side wall (14) is slidably fixed to the support element (13) by means of a connection element (15),
wherein
the handling apparatus (1) also includes at least a second chain (3) meshed between a second drive crown (31) and a second idle crown (32) thus defining a second closed path substantially parallel to the first closed path and similarly comprising two straight portions and two curved portions, respectively opposite each other, **characterized in that** the second chain (3) is suitable for simultaneously defining the width of the housings (10) of all the retaining elements (9), wherein the second drive crown (31) is moved by a second brushless motor (33) independent with respect to the first brushless motor (23),
wherein the support element (13) includes a second seat (135) in which the second chain (3) is hooked,
wherein the second chain (3) is suitable for being hooked by means of a hooking element (136) integral with the connection element (15) and sliding in the second seat (135) in the approach/removal direction of the mobile side wall (14) with respect to the fixed side wall (12).

2. Handling apparatus (1) according to claim 1, **characterized in that** the support element (13) comprises an external block (131) including said seats (134, 135), and an internal block (132) fixed to the external block (131) and in which hooking means (133, 137, 138) to the second chain (3) are suitable for sliding.

3. Handling apparatus (1) according to claim 2, **characterized in that** in the internal block (132) two bars (133) are suitable for sliding, at the ends of which the connection element (15) and consequently the mobile side wall (14) are fixed.

4. Handling apparatus (1) according to claim 3, **characterized in that** the connection element (15) comprises a plate (16) equipped with straight portions and curved portions, and a block (17),
wherein the plate (16) comprises a straight portion (161) provided with through holes (162) suitable for coupling with the block (17) which in turn provides through holes (171), a pair of screws (18) fixing the plate (16) to the block (17).

5. Apparatus according to claim 3 or 4, **characterized in that** the hooking element (136) provides a hollow portion in which to house the second chain (3), the connection between the hooking element (136) and the bars (133) taking place by a block (137) and pins (138).

## Patentansprüche

1. Vorrichtung zur Handhabung (1)
einer Folge von Verpackungen für Teigwaren, körnige Produkte und dergleichen für eine Verpackungsmaschine, umfassend
einen Tragrahmen (100), der mindestens eine erste Kette (2) trägt, die zwischen einem ersten Antriebskranz (21) und einem ersten Leerlaufkranz (22) ineinandergreift, wodurch ein erster geschlossener Weg definiert wird, der zwei gerade Abschnitte und zwei gekrümmte Abschnitte umfasst, die jeweils einander gegenüberliegen, wobei der erste Antriebskranz (21) durch einen ersten bürstenlosen Motor (23) bewegt wird,
eine Vielzahl von Rückhalteelementen (9), die abnehmbar an der ersten Kette (2) befestigt sind,
wobei jedes Rückhalteelement (9) ein Gehäuse (10), das zur Aufnahme einer einzelnen Verpackung geeignet ist, und ein Stützelement (13) umfasst, das zur Verbindung des Gehäuses (10) mit der ersten Kette (2) geeignet ist, die an dem Stützelement (13) in einem ersten Sitz (234) des Stützelements (13) eingehakt ist, wobei die erste Kette (2) geeignet ist, die Rückhalteelemente (9) gleichzeitig entlang des durch dieselbe erste Kette (2) definierten geschlossenen Weges zu bewegen,
wobei das Gehäuse (10) einen im Wesentlichen "C"-förmigen Querschnitt aufweist und durch eine Rückwand (11), eine feste Seitenwand (12) und eine bewegliche Seitenwand (14) gebildet wird, wobei die bewegliche Seitenwand (14) geeignet ist, sich zu der festen Seitenwand (12) hin oder von der festen Seitenwand (12) weg zu bewegen, wodurch der Abstand zwischen den Seitenwänden (12, 14) und folglich die Breite des Gehäuses (10) verändert wird,
wobei die bewegliche Seitenwand (14) mittels eines Verbindungselements (15) verschiebbar an dem Trägerelement (13) befestigt ist,
wobei die Vorrichtung zur Handhabung (1) auch mindestens eine zweite Kette (3) umfasst, die zwischen einem zweiten Antriebskranz (31) und einem zweiten Leerlaufkranz (32) ineinandergreift, wodurch ein zweiter geschlossener Weg definiert wird, der im Wesentlichen parallel zum ersten geschlossenen Weg verläuft und ebenfalls zwei gerade Abschnitte und zwei gekrümmte Abschnitte umfasst, die jeweils einander gegenüberliegen,
**dadurch gekennzeichnet, dass** die zweite Kette (3) geeignet ist, gleichzeitig die Breite der Gehäuse (10) aller Halteelemente (9) zu definieren, wobei der zweite Antriebskranz (31) durch einen zweiten bürstenlosen Motor (33) unabhängig vom ersten bürstenlosen Motor (23) bewegt wird,
wobei das Stützelement (13) einen zweiten Sitz (135) aufweist, in den die zweite Kette (3) eingehängt wird,
wobei die zweite Kette (3) dazu geeignet ist, mittels eines Hakenelements (136), das mit dem Verbindungselement (15) fest verbunden ist, eingehakt zu werden und in dem zweiten Sitz (135) in der Annäherungs-/Entfernungsrichtung der beweglichen Seitenwand (14) in Bezug auf die feste Seitenwand (12) zu gleiten.

2. Vorrichtung zur Handhabung (1) nach Anspruch 1, **dadurch gekennzeichnet, dass** das Stützelement (13) einen äußeren Block (131) mit den genannten Sitzen (134, 135) und einen inneren Block (132) umfasst, der an dem äußeren Block (131) befestigt ist und in dem Einhakmittel (133, 137, 138) an der zweiten Kette (3) gleiten können.

3. Vorrichtung zur Handhabung (1) nach Anspruch 2, **dadurch gekennzeichnet, dass** in dem Innenblock (132) zwei Stangen (133) verschiebbar sind, an deren Enden das Verbindungselement (15) und damit die bewegliche Seitenwand (14) befestigt sind.

4. Vorrichtung zur Handhabung (1) nach Anspruch 3, **dadurch gekennzeichnet, dass** das Verbindungselement (15) eine Platte (16), die mit geraden Abschnitten und gekrümmten Abschnitten versehen ist, und einen Block (17) umfasst, wobei die Platte (16) einen geraden Abschnitt (161) umfasst, der mit Durchgangslöchern (162) versehen ist, die zur Kopplung mit dem Block (17) geeignet sind, der seinerseits Durchgangslöcher (171) aufweist, und ein Paar Schrauben (18), die die Platte (16) an dem Block (17) befestigen.

5. Vorrichtung nach Anspruch 3 oder 4, **dadurch gekennzeichnet, dass** das Hakenelement (136) einen hohlen Abschnitt aufweist, in dem die zweite Kette (3) untergebracht werden kann, wobei die Verbindung zwischen dem Hakenelement (136) und den Stangen (133) durch einen Block (137) und Stifte (138) erfolgt.

## Revendications

1. Appareil de manutention (1) pour une succession d'emballages de pâtes alimentaires, de produits granulaires et similaires, pour une machine d'emballage, comprenant
un cadre porteur (100) qui supporte au moins une première chaîne (2) engrenée entre une première couronne d'entraînement (21) et une première couronne de ralenti (22), définissant ainsi un premier circuit fermé qui comporte deux parties droites et deux parties incurvées, respectivement opposées l'une à l'autre, la première couronne d'entraînement (21) étant déplacée par un premier moteur sans balais (23),
une pluralité d'éléments de retenue (9) fixés de manière amovible à la première chaîne (2),
dans lequel chaque élément de retenue (9) comporte un logement (10) adapté pour loger un seul emballage, et un élément de support (13) adapté pour relier le logement (10) à la première chaîne (2) accrochée à l'élément de support (13) dans un premier siège (234) de l'élément de support (13), dans lequel la première chaîne (2) est adaptée pour déplacer simultanément les éléments de retenue (9) le long du circuit fermé défini par la même première chaîne (2),
dans lequel le logement (10) présente une section sensiblement en forme de "C" et est formé par une paroi arrière (11), une paroi latérale fixe (12) et une paroi latérale mobile (14), la paroi latérale mobile (14) étant adaptée pour se déplacer vers la paroi latérale fixe (12) ou s'éloigner de la paroi latérale fixe (12), faisant ainsi varier la distance entre les parois latérales (12, 14) et par conséquent la largeur du logement (10),
dans lequel la paroi latérale mobile (14) est fixée de manière coulissante à l'élément de support (13) au moyen d'un élément de liaison (15),
dans lequel l'appareil de manutention (1) comprend également au moins une deuxième chaîne (3) engrenée entre une deuxième couronne d'entraînement (31) et une deuxième couronne de ralenti (32), définissant ainsi un deuxième circuit fermé sensiblement parallèle au premier circuit fermé et comprenant également deux parties droites et deux parties incurvées, respectivement opposées l'une à l'autre,
**caractérisé en ce que** la deuxième chaîne (3) est adaptée pour définir simultanément la largeur des logements (10) de tous les éléments de retenue (9),
dans lequel la deuxième couronne d'entraînement (31) est déplacée par un deuxième moteur sans balais (33) indépendant par rapport au premier moteur sans balais (23),
dans lequel l'élément de support (13) comporte un deuxième siège (135) dans lequel la deuxième chaîne (3) est accrochée,
dans lequel la deuxième chaîne (3) est adaptée pour être accrochée au moyen d'un élément d'accrochage (136) intégré à l'élément de liaison (15) et coulissant dans le deuxième siège (135) dans la direction d'approche/retrait de la paroi latérale mobile (14) par rapport à la paroi latérale fixe (12).

2. Appareil de manutention (1) selon la revendication 1, **caractérisé en ce que** l'élément de support (13) comporte un bloc externe (131) comprenant lesdits sièges (134, 135), et un bloc interne (132) fixé au bloc externe (131) et dans lequel des moyens d'accrochage (133, 137, 138) à la deuxième chaîne (3) sont adaptés pour coulisser.

3. Appareil de manutention (1) selon la revendication 2, **caractérisé en ce que** dans le bloc interne (132), deux barres (133) sont adaptées pour coulisser, aux extrémités desquelles l'élément de liaison (15) et par conséquent la paroi latérale mobile (14) sont fixés.

4. Appareil de manutention (1) selon la revendication 3, **caractérisé en ce que** l'élément de liaison (15) comporte une plaque (16) équipée de parties droites et de parties incurvées, et un bloc (17),
dans lequel la plaque (16) comporte une partie droite (161) pourvue de trous traversants (162) adaptés à l'accouplement avec le bloc (17) qui, à son tour, présente des trous traversants (171), une paire de vis (18) fixant la plaque (16) au bloc (17).

5. Appareil selon la revendication 3 ou 4, **caractérisé en ce que** l'élément d'accrochage (136) présente une partie creuse dans laquelle loger la deuxième chaîne (3), la liaison entre l'élément d'accrochage (136) et les barres (133) s'effectuant par un bloc (137) et des goupilles (138).
